# EUROPEAN PATENT APPLICATION

(11) **EP 2 199 649 A1**
(43) Date of publication of application: **23.06.2010**
(21) Application number: 08838190.0
(22) Date of filing: 02.10.2008
(51) Int. Cl.: F16K 1/00, F16K 1/32, F16K 7/12

(54) **BACK PRESSURE RECEIVING VALVE**

(30) Priority: 11.10.2007 JP 2007265587
(71) Applicant: Surpass Industry Co., Ltd., Gyoda-shi Saitama 361-0037 (JP)
(72) Inventor: IGARASHI, Hiroki, Gyoda-shi Saitama 361-0037 (JP)
(74) Representative: Dempster, Benjamin John Naftel
(86) International application number: PCT/JP2008/067959
(87) International publication number: WO 2009/048014

(57) **Abstract**

In a back-pressure responsive valve that receives large back pressure, the influence or the back pressure is minimized to limit or prevent an increase in size of an actuator and to maintain the valve function. A back-pressure responsive value (1A) includes a plug-type valve element (10A) that moves up and down in a valve chamber (2) to open and close a fluid channel (3), an urging part that holds the valve element (10A) in one of a fully closed position or a fully open position, an opening/closing mechanism that opens and closes the valve element (10A) with an operating force larger than that of the urging part, and a diaphragm (8) connected to a shaft (12) of the valve element (10A) and receiving back pressure from the fluid in the fully closed position of the valve element (10A), wherein the diameter of the valve element (10A) is set smaller at a diaphragm (8)-size base portion connected to the shaft (12) than at a valve-seat (7)-side end portion (11).

## Description

### Technical Field

The present invention relates to a back-pressure responsive valve equipped with a diaphragm that separates a channel through which fluid flows and a space in which an opening/closing mechanism of a valve element is accommodated from each other, which receives back pressure with the diaphragm.

### Background Art

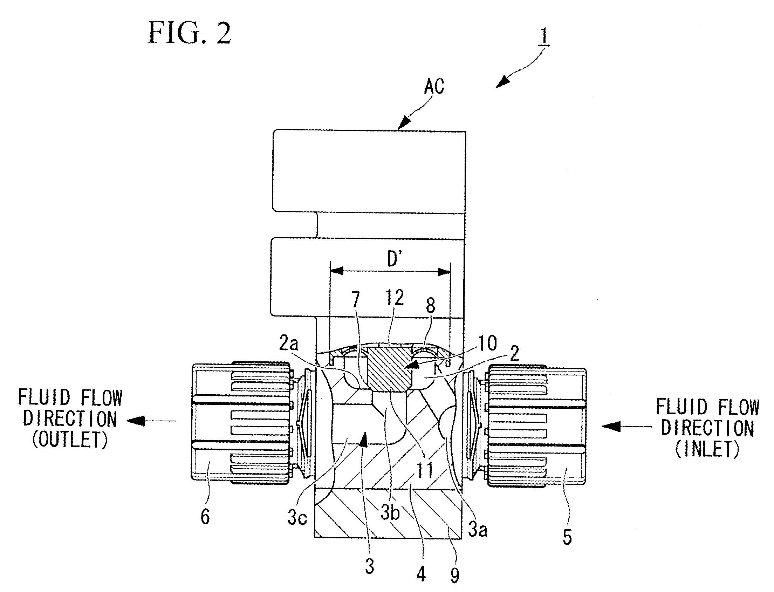

Some known valves that handle fluid, such as chemicals, open and close a fluid channel by moving a plug-type (rod-shaped) valve element up and down in a valve chamber. Such on/off valves include not only manually operated valves that open and close the valve element by manual operation but also valves equipped with an actuator that is operated by air pressure or the like to allow remote control.
A valve 1 shown in Fig. 2 is equipped with an actuator AC that is operated by air pressure, in which a plug-type valve element 10 moves up and down in a valve chamber 2 to open and close a fluid channel 3. This fluid channel 3 includes an inlet side channel 3a, which communicates between the valve chamber 2 formed in a valve main body 4 and a channel inlet 5, and an outlet side channel 3c, which communicates with a channel outlet 6 through a vertical portion 3b extending downward from a bottom surface 2a of the valve chamber 2.

In the above-described valve 1, the plug-type valve element 10 is shaped in the form of a column having substantially the same cross sectional shape in the axial direction, and the state in Fig. 2 in which a lower end portion 11 of the valve element 10 is in close contact with a valve seat 7 is a fully closed position. The valve seat 7 in this case is the peripheral region of the upper end of the vertical portion 3b that opens to the bottom surface 2a and serves as the peripheral portion of the valve main body 4 in which the vertical portion 3b is open.
The above-described valve 1 is referred to as a normally open type, in which a spring member (not shown) is provided on a shaft 12 so as to urge the valve element 10 upward to keep a fully open position. To close the valve 1, air pressure is applied to the pressure receiving surface of the actuator AC so that a downward force larger than the urging of the spring member is generated.

Furthermore, the above-described valve 1 is equipped with a diaphragm 8 that is provided to separate the valve chamber 2 through which fluid flows and the opening/closing mechanism from each other in a fluidtight manner. The diaphragm 8 separates from each other the valve chamber 2 that forms a space in which the valve element 10 is moved up and down and which communicates with the inlet side channel 3a and the vertical portion 3b to form part of a channel for fluid to pass therethrough and a space that accommodates the shaft 12 formed at the top portion of the valve element 10 and used for connection with the actuator AC, mounting the spring member, etc. to thereby prevent fluid that is easily solidified, such as chemical slurry, from flowing into the opening/closing mechanism of the valve 1 (for example, refer to Patent Citation 1).
Patent Citation 1: Japanese Unexamined Utility Model Application, Publication No. Sho 63-74565

### Disclosure of Invention

### Problems to be Solved by the Invention

Meanwhile, the following problems have been pointed out for the above-described conventional valves.
That is, the normally open valve 1 shown in Fig. 2 receives fluid pressure at the channel inlet 5 side in a fully closed state in which air pressure is applied to the actuator AC. Therefore, the diaphragm 8 that separates the valve chamber 2 and the opening/closing mechanism from each other in a fluidtight manner serves also as a fluid pressure receiving surface, and the fluid pressure acts on the shaft 12 as a force (back pressure) in a direction in which the valve element 10 is opened (upward). Accordingly, to keep a fully closed state in which the valve element 10 is assuredly pushed against the valve seat 7, it is necessary to have an opening/closing mechanism that offers a sufficient downward operating force in consideration of the back pressure that the diaphragm 8 receives.

Thus, it is necessary for the valve 1 equipped with the above-described diaphragm 8 to increase the operating force of the actuator AC by an amount corresponding to a force in the opening direction of the valve caused by fluid pressure (back pressure) acting on the valve shaft 12; therefore, to improve the reliability of the valve function for opening/closing the channel without leaks in the closed state, it is necessary to increase the size of the actuator AC, which is undesirable also in view of cost. That is, for example, with the actuator AC using air pressure, assuming the same pressure receiving area, the air pressure to be supplied will increase, or alternatively, assuming the same air pressure, a large pressure receiving area is needed; therefore, to achieve sufficient pressure resistance or expansion of the pressure receiving area, increasing the size of the actuator AC, which is undesirable in view of cost, is an inevitable problem.
The present invention is made in consideration of the above-described circumstances, and it is an object thereof to limit or prevent, in a back-pressure responsive valve that receives large back pressure, an increase in size of an actuator and to minimize the influence of the back pressure to maintain the valve function.

The present invention adopts the following solutions to solve the problems described above.
A back-pressure responsive valve according to the present invention includes a plug-type valve element that moves up and down in a valve chamber to open and close a fluid channel, an urging part that holds the valve element in one of a fully closed position or a fully open position, an opening/closing mechanism that opens and closes the valve element with an operating force larger than that of the urging part, and a diaphragm connected to a shaft of the valve element and receiving back pressure from the fluid in the fully closed position of the valve element, wherein the diameter of the valve element is set smaller at a diaphragm-side base portion connected to the shaft than at a valve-seat-side end portion.

With such a high-back-pressure responsive valve according to the present invention, the valve element is constructed such that the diameter of the diaphragm-side base portion connected to the shaft is set smaller than the diameter of the valve-seat-side end portion; therefore, the diaphragm connected to the outer circumference of the shaft connected to the small diameter portion of the valve element is reduced in form because the valve shaft is decreased in diameter together with the valve element, thus allowing the pressure receiving area to be decreased.
Moreover, with the reduction of the form of the diaphragm, if the external form of the casing that accommodates the diaphragm is the same, the wall thickness that is effective for pressure resisting performance is increased, and if the pressure resisting performance is the same, the external form of the casing can be reduced in size.

According to the present invention described above, since the pressure receiving area can be decreased by reducing the form of the diaphragm that receives back pressure, the need for increasing the size of the actuator to maintain the valve function against high back pressure is eliminated. Therefore, the back-pressure responsive valve equipped with the actuator can obtain remarkable advantages in that the external form an the cost can be decreased and also, high reliability can be maintained for leaks in the fully closed position. Moreover, since the working pressure (pressure resistance) can be increased while maintaining the valve-seat port diameter (orifice diameter), both an improvement in the flow characteristics and the ability to cope with high back pressure can be achieved.

### Brief Description of Drawings

[Fig. 1] Fig. 1 is a partial cross-sectional view showing an embodiment of a back-pressure responsive valve according to the present invention.
[Fig. 2] Fig. 2 is a partial cross-sectional view showing a conventional valve structure.

### Explanation of Reference

- 1A:: back-pressure responsive valve
- 2:: valve chamber
- 3:: fluid channel
- 4:: valve main body
- 7:: valve seat
- 8:: diaphragm
- 10A:: valve element
- 11:: lower end portion
- 12:: shaft
- AC:: actuator

### Best Mode for Carrying Out the Invention

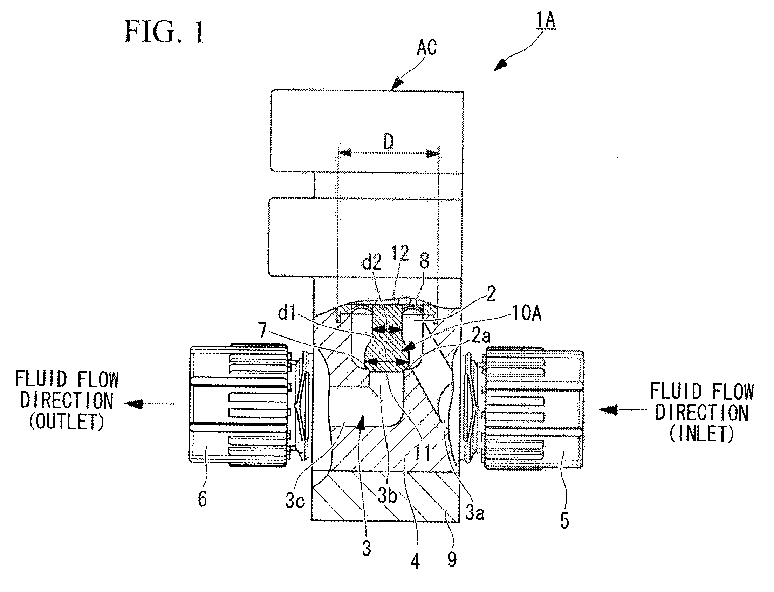

An embodiment of a back-pressure responsive valve according to the present invention will be described hereinbelow with reference to the drawings. In the following description, the same components as in the above-described related art (see Fig. 2) are given the same reference numerals.
A back-pressure responsive valve (hereinafter abbreviated to "valve") 1A shown in Fig. 1 is disposed in a pipe channel through which, for example, chemical slurry, flows as fluid and has a channel opening/closing function to discharge the fluid that flows therein through the channel inlet 5 from the channel outlet 6. The valve 1A is equipped with the actuator AC that operates by turning ON/OFF a supply of air pressure or the like using fluid pressure as an opening/closing mechanism for operating a plug-type valve element 10A. The opening/closing mechanism for opening/closing the valve element 10A is not limited to the actuator AC that uses air pressure or another fluid pressure; for example, a solenoid valve type or the like that opens and closes using an electromagnet may be adopted.

The valve element 10A is a member that opens and closes the fluid channel 3 formed in the valve main body 4 and communicating with the valve chamber 2, which is a space formed in the valve main body 4 and serves as part of the channel through which fluid flows, by moving up and down in the valve chamber 2. The fluid channel 3 includes the inlet side channel 3a that communicates from the channel inlet 5 to the valve chamber 2 and the outlet side channel 3c that communicates with the channel outlet 6 via the vertical portion 3b extending downward from the bottom surface 2a of the valve chamber 2.
The valve chamber 2 is a substantially columnar space, whose bottom surface 2a in which the vertical portion 3b is open is shaped like a bowl whose bottom center is low. Such a bowl-shaped bottom surface 2a ensures that fluid flows out through the vertical portion 3b without remaining in the valve chamber 2.
Reference numeral 9 in the drawing denotes a base securing plate that supports the valve main body 4 of the valve 1A.

In the above-described valve 1A, a state in which a lower end portion 11 of the valve element 10A is in close contact with the bottom surface 2a serving as the valve seat 7 (see Fig. 1) is a fully closed position. The valve seat 7 in this case is the valve main body 4, which is the peripheral region of the upper end of the vertical portion 3b that opens to the bottom surface 2a, and serves as the peripheral portion of the bottom surface 2a in which the vertical portion 3b is open.
The above-described valve 1A is referred to as a normally open type, in which a spring member (not shown), such as a coil spring, is provided on the shaft 12 as an urging part for urging the valve element 10A upward to keep a fully open position in a normal state. To close the valve 1A, air pressure is applied to the pressure receiving surface of the actuator AC so that a downward operating force larger than the upward urging of the spring member is generated.

Furthermore, to prevent fluid that is easily solidified, such as chemical slurry, from flowing into the opening/closing mechanism of the valve 1A, the above-described valve 1A is equipped with the diaphragm 8 that separates the valve chamber 2 through which fluid flows and the opening/closing mechanism from each other in a fluidtight manner. The diaphragm 8 is a member for separating from each other the valve chamber 2 that forms a space in which the valve element 10A is moved up and down and which communicates with the inlet side channel 3a and the vertical portion 3b to form part of a channel for the fluid to pass therethrough and a space that accommodates the shaft 12 formed at the top of the valve chamber 2.
The diaphragm 8 is a donut-shaped member mounted on the outside of the shaft 12, whose outer circumference side is supported by the valve main body 4, and whose inner circumference side is supported by the shaft 12.
The shaft 12 is a member integrally connected to the upper surface of the plug-shaped valve element 10A and extending upward and is used for connection with the actuator AC, mounting the spring member, etc.

In the high-back-pressure responsive valve in which the air pressure for the opening/closing operation is increased to cope with a large back pressure, as in the above-described valve 1A, a base portion diameter d2 of the valve element 10A is set smaller than an end portion diameter d1 (d1 > d2).
Such a valve 1A allows the diameter of the diaphragm 8 to be decreased by an amount corresponding to a decrease in the base portion diameter d2 of the valve element 10A. That is, the inside diameter of the donut-shaped diaphragm 8 is decreased to approximately d2, and an outside diameter D necessary for mounting the diaphragm 8 can also be smaller than D' in the related art; therefore, the area of the diaphragm 8 serving as a back-pressure receiving area can be decreased.
When the pressure receiving area of the diaphragm 8 is decreased in this manner, the back pressure acting on the valve element 10A is reduced. Accordingly, the actuator AC necessary for moving the valve element 10A to the fully closed position and holding it can keep the air pressure applied for operating the valve element 10A low, thus providing a back-pressure responsive valve in which size reduction of the actuator AC is possible.

Since the fluid pressure (back pressure) that acts in the opening direction of the valve element 10A (upward) in the fully closed position is decreased by adopting the above-described high-back-pressure responsive valve 1A, the force of pushing the valve element 10A in the closing direction of the valve element 10A by the actuator AC can be reduced. Accordingly, with the valve 1A, the pressure resistance of the actuator AC can be kept low, which is advantageous in terms of size reduction and cost reduction. That is, since the pressure receiving area can be decreased by decreasing the shape of the diaphragm 8 that receives back pressure, there is no need to increase the size of the actuator AC in order to maintain the valve function against a high back pressure; therefore, the back-pressure responsive valve 1A equipped with the actuator AC can be decreased in external form and cost and can also maintain high reliability for leaks in the fully closed position.

Furthermore, assuming that the outside dimensions of the actuator AC of the valve 10A are substantially the same, the wall thickness of the actuator casing can be increased by an amount corresponding to a decrease in the diameter of the diaphragm 8, which can increase the working pressure (pressure resistance of the valve) while maintaining the valve-seat port diameter (the inlet diameter of the vertical channel portion 3b), which influences the flow characteristics. That is, since this can increase the working pressure (pressure resistance), which determines the upper limit of the pressure of fluid flowing in the valve 1A, while maintaining the valve-seat port diameter (orifice diameter), which determines the flow rate characteristics of the valve 1A, both an improvement in the flow characteristics and the ability to cope with high back pressure can be achieved.

In the above description, the present invention is applied to the normally open type valve in which the valve element 10A is closed by the actuator AC; however, the structure in which the diameter of the valve element 10A is changed, as described above, can also be applied to normally closed type valves and valves that adopt an opening/closing mechanism operated using an electromagnet or the like. With the normally closed type, the urging force of an urging member (coil spring etc.) necessary to maintain the closed state of the valve can be kept low.
The present invention is not limited to the above-described embodiment, and various modifications may be made without departing from the spirit of the present invention.

## Claims

1. A back-pressure responsive valve including a plug-type valve element that moves up and down in a valve chamber to open and close a fluid channel, an urging part that holds the valve element in one of a fully closed position or a fully open position, an opening/closing mechanism that opens and closes the valve element with an operating force larger than that of the urging part, and a diaphragm connected to a shaft of the valve element and receiving back pressure from the fluid in the fully closed position of the valve element,
wherein the diameter of the valve element is set smaller at a diaphragm-side base portion connected to the shaft than at a valve-seat-side end portion.
